# EUROPEAN PATENT APPLICATION

(11) **EP 2 787 448 A1**
(43) Date of publication of application: **08.10.2014**
(21) Application number: 12852905.4
(22) Date of filing: 03.12.2012
(51) Int. Cl.: G06F 17/21

(54) **METHOD AND DEVICE FOR DETERMINING FONT**

(30) Priority: 01.12.2011 CN 201110393936
(71) Applicant: Peking University Founder Group Co., Ltd, Haidian District Beijing 100871 (CN); Beijing Founder Apabi Technology Ltd, Beijing 100080 (CN); Founder Information Industry Holdings Co., Ltd., Beijing 100871 (CN)
(72) Inventor: QIU, Ruiheng, Beijing 100871 (TW)
(74) Representative: Cohausz & Florack
(86) International application number: PCT/CN2012/085773
(87) International publication number: WO 2013/079038

(57) **Abstract**

A technique for identifying font in connection with text data processing. An original font corresponding to an embedded font used in an electronic document is identified. At least one glyph is selected from a glyph collection of the embedded font. The font corresponding to each selected glyph is identified, and the original font corresponding to the embedded font is identified according to the font that corresponds to each selected glyph.

## Description

### Field of the Invention

The present invention relates to text data processing, and more particularly, to a method and device for identifying font.

### Background of the Invention

To ensure document display consistency on different processing platforms, font embedding is widely used. Specifically, partial glyphs are extracted from a glyph collection corresponding to an original font, and the extracted glyphs are integrated to form a new glyph collection. Such processing is referred to as font embedding, and the obtained new font, that is, the font corresponding to the new glyph collection, is an embedded font. For example, partial glyphs are extracted from the glyph collection corresponding to the Song font, the extracted glyphs are integrated to form a new glyph collection, and thereby the font embedding process is achieved. The font corresponding to the new glyph collection is an embedded font. Supposing the embedded font is embedded font A, the original font corresponding to the embedded font A is the Song font. The glyph collection of an embedded font, here, the embedded font A, can be considered as a subset of the glyph collection of the original font (the Song font) corresponding to the embedded font.

Generally, only partial glyphs, which are required to display characters in a document, are included in the glyph collection of an embedded font, so as to reduce the data size of the glyph collection. In addition, the glyph collection may also include a mapping relationship between a character encoding or an index of each character in the document and the corresponding glyph. When a character in the document is displayed, the glyph corresponding to the character encoding or index of the character is obtained according to the mapping relationship, and then the character is displayed according to the obtained glyph.

There are, however, some disadvantages in existing font embedding techniques:
Although font embedding techniques aid in document display consistency on different platforms, there are some limitations in use, since the original font corresponding to the embedded font used in a document cannot be readily identified.

For example, since only partial glyphs in the glyph collection of the original font are included in the glyph collection of the embedded font, a user cannot edit the document freely. For instance, when the user needs to add a word " 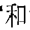 " into the document, if the glyph of the word " 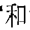 " is not included in the glyph collection of the embedded font, the word " 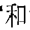 " cannot be displayed, thus preventing a successful edit operation.

As another example, since the glyph collection of the embedded font will be used when displaying the document, when a document stored, for example, at a server needs to be displayed at a client, the client needs to download all configuration files of this document, including the glyph collection of the embedded font used by the document. But, since the data size of the glyph collection of the embedded font is generally large, the display speed of these documents in a network environment is slow.

### Summary of the Invention

An object of the present invention is to provide a method and device for identifying a font where, heretofore, the original font corresponding to an embedded font used in a document cannot be identified.

In one embodiment of the invention, an embedded font used by a document is identified. At least one glyph in a glyph collection of the embedded font is selected. A font corresponding to each selected glyph is identified; and an original font corresponding to the embedded font is identified according to the font that corresponds to each selected glyph.

The invention contemplates a device for identifying a font, comprising: an embedded font identifying unit for identifying an embedded font used by a document; a glyph selecting unit for selecting at least one glyph in a glyph collection of the embedded font; a glyph font identifying unit for identifying a font corresponding to each selected glyph; and an original glyph identifying unit for identifying an original font corresponding to the embedded font according to the font that corresponds to each selected glyph.

In the present invention, at least one glyph is first selected from a glyph collection of an embedded font, then a font corresponding to each selected glyph is identified, and an original font corresponding to the embedded font is identified according to the font that corresponds to each selected glyph. It can be seen that a solution of identifying the original font corresponding to an embedded font used in a document can be implemented with the present invention.

### Brief description of the drawings

**Figure 1** is a schematic flowchart of a method provided by an embodiment of the present invention;
**Figure 2** is a schematic flowchart of an embodiment of the present invention; and
**Figure 3** is a schematic diagram of the structure of a device provided by an embodiment of the present invention.

### Detailed Description of Certain Preferred Embodiments

To solve the problem that an original font corresponding to an embedded font used in a document cannot be identified, an embodiment of the present invention provides a method for identifying font. In this method, first, at least one glyph is selected from a glyph collection of an embedded font, or at least one glyph corresponding to a character using the embedded font is selected from a document, then a font corresponding to each selected glyph is identified, and an original font corresponding to the embedded font is identified according to the font that corresponds to each selected glyph.

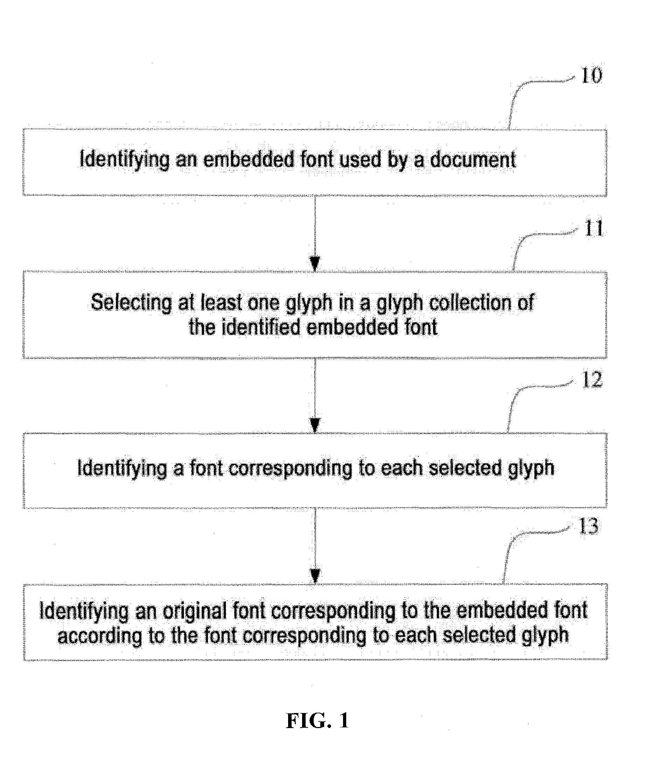

Referring to **Figure 1**, the method for identifying font provided by the embodiment of the present invention includes the following steps:
Step 10: Identifying an embedded font used by a document;

Herein, the embedded font used by each character in the document is recorded in the data of an electronic file that includes description information of the document, and the embedded font used by each character in the document may be identified as the embedded font used by the document according to the description information.
Step 11: Selecting at least one glyph in a glyph collection of the identified embedded font;
Step 12: Identifying a font corresponding to each selected glyph; and
Step 13: Identifying an original font corresponding to the embedded font according to the font corresponding to each selected glyph.

In step 11, at least one glyph in the glyph collection of the embedded font is selected, specifically, this step may be implemented by using the following two approaches:
In the first approach, when a mapping relationship between character encodings and glyphs is included in the document information, glyphs respectively corresponding to a plurality of preset common characters are identified according to the mapping relationship, and the identified glyphs are selected from the glyph collection of the embedded font.

In the second approach, the occurrences of each glyph using the embedded font in the document is counted, and at least one glyph with the largest number of occurrences is selected among the glyphs. This method is applicable to the situation wherein the mapping relationship between character encodings and glyphs is not included in the document information, and also applicable to the situation wherein the mapping relationship between character encodings and glyphs is included in the document information.

In step 12, a font corresponding to each selected glyph is identified. This step may be implemented by using the following two approaches:
In the first approach, for each selected glyph, the character encoding corresponding to the glyph is identified, and a glyph feature value of this glyph is calculated. A pre-generated glyph feature table is searched for the font corresponding to the character encoding and the glyph feature value, and the found font is identified as the font corresponding to the glyph.

In the second approach, for each selected glyph, a glyph feature value of this glyph is calculated. A glyph feature table is searched for a font corresponding to the glyph feature value, and the found font is identified as the font corresponding to the glyph.

The glyph feature table in the above two approaches includes a mapping relationship among character encodings, fonts and glyph feature values. A preferred method of generating a glyph feature table is as follows: a plurality of preset common characters is selected; glyphs of the selected plurality of common characters are extracted from a plurality of locally stored plural glyph collections of fonts; a glyph feature value of each extracted glyph is calculated; and a mapping relation of the extracted glyph is stored in the glyph feature table, wherein each mapping relation includes the font corresponding to the glyph, the character encoding corresponding to the glyph, and the glyph feature value corresponding to the glyph.

In the first above-mentioned approach of identifying the character encoding corresponding to the glyph may be implemented by using the following two approaches:
In the first approach, when a mapping relationship between the character encoding and the glyph is included in the glyph collection of an embedded font, the character encoding corresponding to the glyph is identified according to the mapping relationship.

In the second approach, the character encoding corresponding to the glyph is identified by using an optical character recognition (OCR) technique.

In step 13, the original font corresponding to the embedded font is identified according to the font corresponding to each glyph, specifically, this step may be implemented by using the following two techniques:
In the first technique, if the fonts corresponding to each glyph are the same font, this same font is identified as the original font corresponding to the embedded font.

In the second technique, glyphs corresponding to the same font are identified from the glyphs selected in step 11, and it is determined whether the glyphs satisfy a set condition. When this condition is satisfied, the same font is identified as the original font corresponding to the embedded font, and examples are described below:
Example 1: if the number of the glyphs corresponding to the same font exceeds a preset threshold value, the same font is identified as the original font corresponding to the embedded font. The threshold value is an integer larger than 0.
Example 2: if the ratio of the number of the glyphs corresponding to the same font to the total number of the glyphs selected in step 11 exceeds a pre-set threshold value, the same font is identified as the original font corresponding to the embedded font. The threshold value is between 0 and 1.
Example 3: if the sum of weighted values of the glyphs corresponding to the same font exceeds a preset threshold value, the same font is identified as the original font corresponding to the embedded font. The threshold value is a value larger than 0. For example, if the number of glyphs corresponding to the same font is 60, wherein the weighted value of 10 glyphs is 2, and the weighted value of the other 50 glyphs is 1, the sum of the weighted values of the 60 glyphs is 70. If the threshold value is 50, the font corresponding to the 60 glyphs is the original font corresponding to the embedded font.

Obviously, the present invention is not limited to the above methods. Any method capable of identifying the original font corresponding to the embedded font according to the glyphs that correspond to the same font is contemplated by the present invention.

Preferably, after identifying the original font corresponding to the embedded font, when a character is to be displayed, a glyph corresponding to the character to be displayed is searched for from a locally stored glyph collection corresponding to the original font, and the character to be displayed is displayed using the found glyph.

Preferably, in the present invention, information used by document processing applications, such as character editing, etc., may be stored in the electronic document file, and the information includes information of the original font corresponding to the embedded font, identified character encoding, etc.

It should be noted that the present method may be carried out by a client, a server or other device capable of processing a document. If a server, the server can transmit the information of the identified original font corresponding to the embedded font, which is carried in the document file, to a client, and when displaying the document on the client, a glyph corresponding to each character to be displayed is searched for from a locally stored glyph collection corresponding to the original font, and the character to be displayed is displayed using the found glyph.

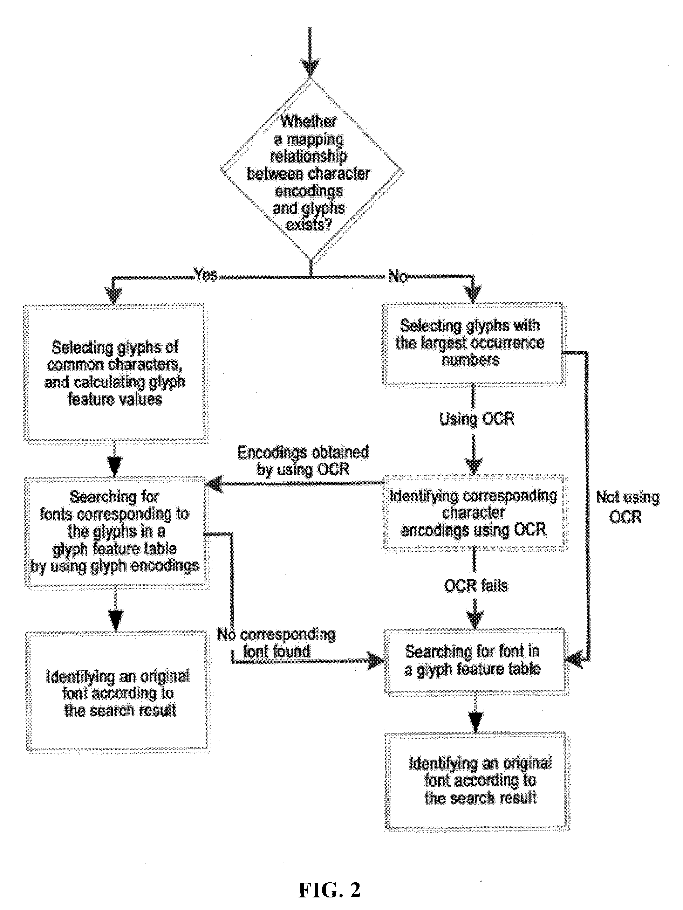

The present invention is further described in detail below; in connection with the flow chart of Fig. 2:
For each embedded font used by a document, the following steps are performed:
   Step 1: Checking whether a mapping relationship between character encodings and glyphs exists in a glyph collection of the embedded font, and if it exists, proceeding to step 2, otherwise, proceeding to step 5;
   Step 2: Selecting at least one glyph of a common character from the glyph collection of the embedded font, calculating a glyph feature value of each selected glyph, and identifying the character encoding corresponding to each glyph according to the mapping relationship between character encodings and glyphs;
   Step 3: For each selected glyph, searching for a font corresponding to the character encoding and the glyph feature value of the glyph in a glyph feature table, and identifying the found font as the font of the glyph;
   Step 4: Identifying an original font corresponding to the embedded font according to the font of each selected glyph, and the flow ends.
      Specifically, if the font of each selected glyph belongs to the same font A, the original font of the embedded font is identified as the font A.
   Step 5: Counting the number of occurrences of each glyph using the embedded font in the document, and selecting at least one glyph with the largest number of occurrences; and proceeding to step 6a or step 6b;
   Step 6a: For each selected glyph, identifying the character encoding of the glyph using an OCR technique. If the character encoding is identified successfully, calculating a glyph feature value of the glyph, by proceeding to step 3 which searches for a font corresponding to the character encoding and the glyph feature value of the glyph in the glyph feature table. Then, proceeding to step 4, the found font is identified as the font of the glyph, and then proceeding to step 7. If no corresponding font is found in step 3, the flow chart proceeds to step 6b;
   Step 6b: For each selected glyph, calculating the glyph feature value of this glyph. A search is carried out for a font corresponding to the glyph feature value of the glyph in the glyph feature table, and the found font is identified as the font corresponding to the glyph;
   Step 7: Identifying an original font corresponding to the embedded font according to the font of each selected glyph, and the flow ends;

If the number of glyphs corresponding to the same font exceeds a preset threshold value, it may be determined that the original font corresponding to the embedded font is the same font. For example, assume 20 common glyphs are selected. If at least 18 glyphs correspond to the same font A, it can be determined that the original font corresponding to the embedded font is the font A.

The glyph feature table records a number of mapping relations of character encoding, original font and glyph feature value. As the number of the locally stored fonts is limited (hundreds of common fonts), and the number of the selected glyphs is generally not very large, the cost of constructing a glyph feature table for common characters is acceptable, and the costs for matching and searching the glyph feature table are very small.

In one practical application, there may be more than one glyph feature table. For example, one glyph feature table may be created for each character type, and the character type includes numbers, letters, punctuation characters, Chinese characters and other special symbols. For each glyph feature table, the rules for selecting a glyph may be different. For example, as punctuation has fewer kinds, the mapping relations of the glyphs corresponding to all punctuations may be added to the corresponding glyph feature table; while for Chinese characters, the mapping relations of the glyphs corresponding to the 200 most common Chinese characters may be added to the corresponding glyph feature table. When using the glyph feature tables, a font may be searched for in the corresponding glyph feature table according to the character type; the font may be searched for in all glyph feature tables also.

The identifying rate in an OCR technique may be incorrect; and at the same time, it is possible that what has been selected as a selected common character is not actually a common character. Thus, there may be a situation that a corresponding font cannot be found according to the glyph feature value, and therefore, when performing the step of identifying the original font in step 7, the threshold value may be lowered properly.

For the embedded font having a mapping relationship between character encodings and glyphs, the mapping relationship may be ignored. That is, if the query of step 1 is answered in the affirmative, i.e. the mapping relationship between character encodings and glyphs exists in step 1, the flow may proceed to step 5. However, without the assistance of the character encodings, the efficiency and accuracy may be affected under some conditions.

With the present embodiment, the original font can be found according to the embedded font, thereby text editing may be performed freely. Also, data transmission of the embedded font may be omitted. The present embodiment is also applicable to other applications relying on the original font.

### Embodiment 1:

The embedded font A is obtained from the Simsun font (simsun.ttf), and its glyph collection includes a mapping relationship between character encodings and glyphs. The MD5 value of the glyph data is used as the glyph feature value of the glyph. The 200 common Chinese characters (such as " 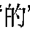 ", " 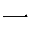 ", " 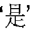 ", " 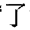 ", etc.) are selected, and the glyphs of the 200 characters are extracted from the glyph collections of the 10 common Chinese fonts (such as Simsum, Bold, KaiTi, ST, Fang Song, Young circle, etc.). The glyph feature value of each glyph is calculated respectively, and thus a glyph feature table of the common Chinese characters is obtained, which is illustrated as table 1 below:

**Table 1**

| Character encoding | Font | Glyph feature value |
|---|---|---|
| 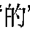 | Simsum | 53d1169058611886e5cf2b2b4dd0627f |
| - | Simsum | c8f77ee32399b7bbe05560f9da7aa5a3 |
| 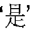 | Simsum | 65c8c486368da89dedd430b09127f883 |
| 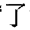 | Simsum | 5e770190e1fae6e6a37e7d77f06bb9e9 |

In this example, the glyphs corresponding to four characters " 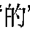 ", " 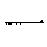 ", " 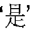 "and " 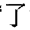 " are selected from the glyph collection of the embedded font A, as these four characters are common, and included in the glyph collection of the embedded font A. Alternatively, the common characters which are not only included in the glyph collection of the embedded font, but are included in the glyph feature table, are selected.

Then, the glyph feature value corresponding to each selected glyph is calculated, for example, the glyph feature value of " 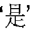 " is calculated as 65c8c486368da89dedd430b09127f883. The font of which the character encoding is " 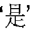 " and the feature value is 65c8c486368da89dedd430b09127f883 is identified as Simsun by searching the glyph feature table.

Likewise, the fonts corresponding to the other three glyphs are also identified as Simsun.

As the font corresponding to each selected glyph is Simsun, the original font corresponding to the embedded font A is identified as Simsun.

The glyph feature table in the above embodiment is not necessarily saved as a table. Rather, the glyph features may be saved in other data structures such as a tree, as long as searching and locating can be performed according to the conditions provided.

### Embodiment 2:

The embedded font A is obtained from the Simsun font (simsun.ttf), and its glyph collection does not include a mapping relationship between character encodings and glyphs. The MD5 value of the glyph data is used as the glyph feature value of the glyph. The 200 common Chinese characters (such as " 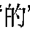 ", " 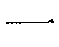 ", " 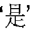 ", " 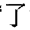 ", etc., without " 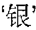 ") are selected, and the glyphs of the 200 characters are extracted from the glyph collections of the 10 common Chinese fonts (such as Simsum, Bold, KaiTi, ST, Fang Song, Young circle, etc.).The glyph feature value of each glyph is calculated respectively, and thus a glyph feature table of the common Chinese character is obtained as shown in table 1.

In this example, the number of occurrences of the common glyphs using the embedded font A in the document are counted, and the five common glyphs with the largest occurrence numbers, for example, " 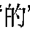 ", " 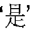 ", " 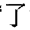 ", " 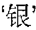 ", and "-"; are selected.

When processing the glyph of " 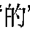 ", recognition is first performed using an OCR technique to obtain the character encoding of " 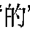 ". Then, identifying the glyph of " 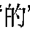 " is identified as corresponding to Simsun by searching the glyph feature table according to the character encoding and glyph feature value 53d1169058611886e5cf2b2b4dd0627f of " 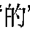 ".

When processing the glyph of " 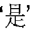 the character may be incorrectly recognized as " 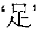 " by using an OCR technique, thus no corresponding font will be found in the glyph feature table. But, the glyph of " 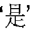 " will be identified as corresponding to Simsun by directly searching the glyph feature table according to the glyph feature value 65c8c486368da89dedd430b09127f883 of " 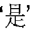 ".

The redundant description regarding " 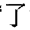 " and " 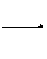 " is omitted here. The glyphs of both" 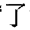 " and " 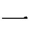 " will be identified as corresponding to Simsun. When processing the glyph of " 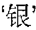 ", the font corresponding to the glyph cannot be found by using an OCR technique and the glyph feature value. Accordingly, after processing the five glyphs is completed, four glyphs corresponding to Simsun will be found, and the font of one remaining glyph is not identified. Considering that some differences may exist between the distribution in a document of common glyphs and that of common characters, it is finally determined that the original font of the embedded font A is Simsun, even though the font of the fifth character us not positively identified.

In the present invention, the information of the identified original font corresponding to the embedded font may be written back into the description information of the document for subsequent application use. For example, when a character needs to be displayed, if the glyph of the character is not included in the glyph collection of the embedded font, the glyph collection of the original font corresponding to the embedded font can be searched for the glyph of the character, and then text displaying is performed according to the glyph.

Likewise, in the present invention, the identified character encoding may also be written back into the configuration file of the document for applications such as text editing, etc. For example, when a character needs to be edited, the corresponding glyph may be directly found according to the saved character encoding of the character, and then the text editing is performed according to the glyph. It is not necessary to temporarily identify the character encoding of the character; and thus the display speed is improved.

In the present invention, in order to calculate, Message Digest Algorithm (MD5) may be used, and in actual application Secure Hash Algorithm (SHA-1) or other digest calculation methods may be used. Contour feature extraction in image processing or other techniques also may be used to perform the calculation.

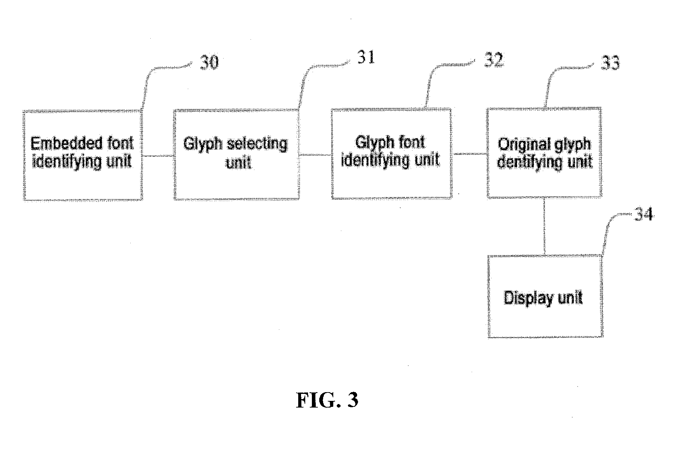

Referring to **Figure 3**, a device for identifying font is illustrated. The device comprises: an embedded font identifying unit 30 for identifying an embedded font used by a document; a glyph selecting unit 31 for selecting at least one glyph in a glyph collection of the embedded font, or for selecting at least one glyph corresponding to a character using the embedded font in the document; a glyph font identifying unit 32 for identifying a font corresponding to each selected glyph; and an original glyph identifying unit 33 for identifying an original font corresponding to the embedded font according to the identified font that corresponds to each selected glyph.

When a mapping relationship between character encodings and glyphs is included in the document, the glyph selecting unit 31 is used to identify the glyphs respectively corresponding to a plurality of preset common characters according to the mapping relationship, and the identified glyphs are selected from a glyph collection of the embedded font. Alternatively, the glyph selecting unit 31 is used to count the number of occurrences of each glyph using the embedded font in the document, and at least one glyph with the largest occurrence number among the glyphs is selected.

The glyph font identifying unit 32 is used to identify a character encoding corresponding to the glyph for each selected glyph. The glyph feature value of this glyph is calculated; and a pre-generated glyph feature table is searched for a font corresponding to the character encoding and the glyph feature value. The found font is identified as the font corresponding to the glyph. Alternatively, the glyph font identifying unit 32 is used to calculate a glyph feature value for each selected glyph. The glyph feature table is searched for a font corresponding to the calculated glyph feature value, and the found font is identified as the font corresponding to the glyph. The glyph feature table includes a mapping relationship among character encodings, fonts and glyph feature values.

When a mapping relationship between character encodings and glyphs is included in the glyph collection, the glyph font identifying unit 32 is used to identify the character encoding corresponding to the glyph according to the mapping relationship. Alternatively, the glyph font identifying unit 32 is used to identify the character encoding corresponding to the glyph by using an OCR technique.

If the font corresponding to each glyph is the same font, the original glyph identifying unit 33 is used to identify this same font as the original font corresponding to the embedded font. Alternatively, the original glyph identifying unit 33 is used to identify glyphs corresponding to the same font, and determines whether the glyphs satisfy a set condition. When that condition is satisfied, the same font is identified as the original font corresponding to the embedded font.

The device shown in Fig. 3 also includes a display unit 34. After the original font corresponding to the embedded font is identified, when a character needs to be displayed, the display unit 34 searches for a glyph corresponding to the character to be displayed in a locally stored glyph collection corresponding to the original font. The character then is displayed using the found glyph.

In summary, the beneficial effects of the present invention include the following:
In the embodiments of the present invention, at least one glyph is first selected from a glyph collection of an embedded font used in a document. Then a font corresponding to the embedded font is determined according to the font that corresponds to each selected glyph. It can be seen that identifying the original font corresponding to the embedded font used in the document can be implemented by the present invention, and the problem that an original font corresponding to an embedded font used in a document cannot be identified is thus solved.

After the original font corresponding to the embedded font is identified, when a character needs to be displayed, a locally stored glyph collection corresponding to the original font is searched for a glyph corresponding to the character to be displayed; and the character to be displayed is displayed using the found glyph. This overcomes the problem due to an original font corresponding to an embedded font used in a document not being identified. For example, when a user needs to add a character to a document, if a glyph of the character to be added is not included in the glyph collection of the embedded font used by the document, a locally stored glyph collection of the original font corresponding to the embedded font can be searched for the glyph of the character to be added. Then text is displayed according to the glyph, and the problem of unsuccessful editing is thus avoided. As another example, when a document stored in a server needs to be displayed on a client device, the client may obtain a locally stored glyph collection of the original font corresponding to the embedded font used by the document, but need not download the glyph collection of the embedded font used by the document. As a result, the display speed of the document in a network environment is improved.

The present invention has been described with reference to the methods, devices (systems), and the flowchart and/or block diagram of a computer program product according to embodiments of the present invention. It should be understood that each flow element and/or block, and the combination of flow elements and/or blocks, of the flowchart and/or block diagram may be implemented by instructions of a computer program. These instructions of the computer program may be provided to a general purpose computer, a dedicated computer, an embedded processor, or other processor of a programmable data processing device to produce a machine, such that the instructions which are performed by the computer or other processor of programmable data processing device produce a device used to implement the functions designated by one or more steps in the flowchart and/or one or more blocks in the block diagram herein.

These instructions of the computer program may be stored in a non-transitory computer readable memory which can instruct a computer or other programmable data processing device to function in a particular manner, such that the instructions stored in the computer readable memory produce a product including an instruction device. The instruction device implements the functions designated by one or more steps in the flowchart and/or one or more blocks in the block diagram herein.

These instructions of the computer program may also be loaded into a computer or other programmable data processing device, such that a series of operating procedures is performed on the computer or other programmable data processing device to produce processing implemented by the computer, thereby the instructions performed on the computer or other programmable data processing device provide the procedures used to implement the functions designated by one or more steps in the flowchart and/or one or more blocks in the block diagram herein.

While the preferred embodiments of the present invention have been described, once a person skilled in the art appreciates the basic inventive concept herein, additional variations and modifications can be made to these embodiments. Therefore, the following claims are intended to be interpreted to include preferred embodiments and all variations and modifications within the scope of the present invention.

Obviously, various modifications and variations can be made by one skilled in the art without departing from the spirit and scope of the present invention. As such, if these modifications and variations of the present invention come within the scope of the claims and their equivalents, it is intended that the present invention cover such modifications and variations.

## Claims

1. A method for identifying a font, used in a document comprising:
identifying an embedded font used by an electronic document;
selecting at least one glyph in a glyph collection of the embedded font;
identifying a font corresponding to each selected glyph; and
identifying an original font corresponding to the embedded font according to the font that corresponds to each selected glyph.

2. The method of claim 1, wherein, the step of selecting at least one glyph in a glyph collection of the embedded font includes:
(A) identifying glyphs respectively corresponding to a plurality of preset common characters according to a mapping relationship between character encodings and glyphs in the document, and selecting the identified glyphs from the glyph collection of the embedded font; or
(B) counting the number of occurrences of each glyph using the embedded font in the document, and selecting at least one glyph with the largest number of occurrences among the glyphs.

3. The method of claim 1, wherein, the step of identifying a font corresponding to each selected glyph includes:
(A) for each selected glyph, identifying a character encoding corresponding to the glyph, calculating a glyph feature value of the glyph, searching for a font corresponding to the character encoding and the glyph feature value in a pre-generated glyph feature table, and identifying the font found in the glyph feature table as the font corresponding to the glyph; or
(B) for each selected glyph, calculating a glyph feature value of the selected glyph, searching for a font corresponding to the glyph feature value in a glyph feature table, and identifying the font found in the glyph feature table as the font corresponding to the glyph;
wherein the glyph feature table of (A) and (B) includes a mapping relationship among character encodings, fonts and glyph feature values.

4. The method of claim 3, wherein the step of identifying a character encoding corresponding to the glyph includes:
(i) when the mapping relationship between character encodings and glyphs is included in the glyph collection of the embedded font, identifying the character encoding corresponding to the glyph according to the mapping relationship; or
(ii) identifying the character encoding corresponding to the glyph by using an optical character recognition (OCR) technique.

5. The method of claim 1, wherein the step of identifying an original font corresponding to the embedded font includes:
(a) if the font corresponding to each glyph is a same font, identifying the same font as the original font corresponding to the embedded font; or
(b) identifying glyphs corresponding to a same font, determining whether the glyphs satisfy a set condition, and when the set condition is satisfied, identifying the same font as the original font corresponding to the embedded font.

6. The method of claim 1, wherein when a character is to be displayed, after an original font corresponding to the embedded font is identified, the method further comprises
searching a locally stored glyph collection corresponding to the original font, for a glyph corresponding to the character to be displayed, and displaying the character using the glyph found from the search.

7. A programmed processor operating as a device for identifying a font, comprising:
an embedded font identifying unit, configured to identify an embedded font used by an electronic document;
a glyph selecting unit, configured to select at least one glyph in a glyph collection of the embedded font;
a glyph font identifying unit, configured to identify a font corresponding to each selected glyph; and
an original glyph identifying unit, configured to identify an original font corresponding to the embedded font according to the font that corresponds to each selected glyph.

8. The device of claim 7, wherein the glyph selecting unit is used for:
(A) identifying glyphs respectively corresponding to a plurality of preset common characters according to a mapping relationship between character encodings and glyphs is in the document, and selecting the identified glyphs from the glyph collection of the embedded font; or
(B) counting the number of occurrences of each glyph using the embedded font in the document, and selecting at least one glyph with the largest number of occurrences among the glyphs.

9. The device of claim 7, wherein the glyph font identifying unit is used:
(A) for each selected glyph, identifying a character encoding corresponding to the glyph, calculating a glyph feature value of the glyph, searching for a font corresponding to the character encoding and the glyph feature value in a pre-generated glyph feature table, and identifying the font found in the glyph feature table as the font corresponding to the glyph; or
(B) for each selected glyph, calculating a glyph feature value of the selected glyph, searching for a font corresponding to the glyph feature value in a glyph feature table, and identifying the font found in the glyph feature table as the font corresponding to the glyph;
wherein the glyph feature table of (A) and (B) includes a mapping relationship among character encodings, fonts and glyph feature values.

10. The device of claim 9, wherein, the glyph font identifying unit is used for:
(i) when the mapping relationship between character encodings and glyphs is included in the glyph collection of the embedded font, identifying the character encoding corresponding to the glyph according to the mapping relationship; or
(ii) identifying the character encoding corresponding to the glyph by using an optical character recognition (OCR) technique.

11. The device of claim 7, wherein the original glyph identifying unit is used for:
(a) if the font corresponding to each glyph is a same font, identifying the same font as the original font corresponding to the embedded font; or
(b) identifying glyphs corresponding to a same font, and determining whether the glyphs satisfy a set condition, and when the set condition is satisfied, identifying the same font as the original font corresponding to the embedded font.

12. The device of claim 7 further comprising a display unit that operates after the original font corresponding to the embedded font is identified, for searching a locally stored glyph collection corresponding to the original font, for a glyph corresponding to a character to be displayed and displaying the character using the glyph found in the locally stored glyph collection.
